# EUROPEAN PATENT SPECIFICATION

(11) **EP 2 306 108 B1**
(45) Date of publication and mention of the grant of the patent: **20.11.2013**
(21) Application number: 09171380.0
(22) Date of filing: 25.09.2009
(51) Int. Cl.: F24F 13/24, F24F 12/00

(54) **A ventilating arrangement**
Belüftungsanordnung
Agencement de ventilation

(43) Date of publication of application: 06.04.2011
(73) Proprietor: Östberg, Hans, 774 35 Avesta (SE)
(72) Inventor: Östberg, Hans, 774 35 Avesta (SE)
(74) Representative: Olsson, Jan

(56) References cited:
- WO-A1-94/20798
- WO-A1-03/073016
- WO-A1-2009/000974
- FI-A- 903 138
- FR-A1- 2 700 203

## Description

### TECHNICAL FIELD OF THE INVENTION AND PRIOR ART

The present invention relates to an arrangement for ventilating one or more rooms of a building according to the preamble of appended claim 1. Such an arrangement is known through WO 2009/000974 A1.

Such arrangements may be used in all types of buildings for obtaining heat transfer between the flows of supply air to rooms of the building and the flow of exhaust air from the rooms of the building. These arrangements are then mostly used for recovering energy by transfer of heat from the warmer exhaust air to the colder supply air before this is supplied to the rooms of the building, but it is also possible to use an arrangement of this type for transferring heat in the opposite direction for lowering the temperature of supply air before this is supplied to the rooms of the building during hotter seasons or in warmer regions of the earth.

This type of arrangements having said four openings arranged on the same side are used where it is suitable to have all connections thereto on one side of the casing. This may be due to a restricted available space for the arrangement or a desire to have said conduits, i.e. ventilation pipes, extending in only one direction away from said casing. These arrangements are then mostly intended to be arranged with said side on the top and are then mostly called ventilating arrangements with top connection. When arranging such a ventilating arrangement with the casing secured to a wall in a said room close to the ceiling thereof, this means that the ventilating pipes may be led to the ceiling and further to different rooms of the building or to the exterior while being hidden as much as possible.

A heat exchanger in the form of a rotary heat exchanger in such a ventilating arrangement is preferred, since a rotary heat exchanger has a high efficiency and it avoids problems with ice formation during the winter as would have been the case when using for instance a plate heat exchanger. Thus, it is for a ventilating arrangement of this type not necessary to provide any automatic defrosting function.

An arrangement of this type has often to be located where restricted place is available or there is for other reasons desired to keep the dimensions of the casing thereof within restricted limits, so that the casing often has to have determined outer dimensions.

There is an ongoing attempt to improve ventilating arrangements of this type with respect to efficiency, noise level etc. Said determined dimensions of the casing make these attempts rather tricky. For example the efficiency of the rotary heat exchanger is increased with an increased diameter and depth thereof. However, said fan members have to be designed to be able to obtain a certain air flow rate, in which the power needed for said fan members is among others depending upon the cross-sections of the air flow paths inside said casing.

### SUMMARY OF THE INVENTION

The object of the present invention is to provide a ventilating arrangement of the type defined in the introduction which is to at least some extent improved with respect to such arrangements already known.

This object is according to the invention obtained by providing such an arrangement with the features of the characterizing part of claim 1.

The presence of these features results in an improvement in the sense that a substantial reduction of the level of noise caused by the operation of the ventilating arrangement in the rooms in question of a building is achieved. It has been found that for an arrangement having the feature of a first fan member with means configured to direct the flow of exhaust air from this member substantially in one direction a considerable sound silencing effect will be obtained by combining this feature with members of sound absorbing material defining a channel forming substantially the entire portion of said first path extending between said first fan member and said first outlet opening of the casing. The sound absorbing effect will be further increased by providing said first path portion with a substantially rectangular cross-section at least at the end thereof closest to the first fan member and making said members of sound absorbing material form at least two opposite main walls defining said first path portion. It has been found that even if only said two opposite main walls are covered by said members of sound absorbing material with such a design of said first path portion a substantial sound suppressing effect by the arrangement thereof in said portion of said first path conducting supply air may be obtained. This makes it possible to obtain a substantial reduction of the level of noise also when the space available for the ventilating arrangement is very restricted.

It may be mentioned that FR 2 700 203 A1 shows that it is already known to arrange sound absorbing material in a supply air channel of a ventilating arrangement, which however is of another type than defined in the preamble of appended claim 1.

According to an embodiment of the invention the average thickness of said at least two main opposite walls of sound absorbing material is at least 50% of the cross-section dimension of said first path portion in the direction of said thickness, which results in a substantial reduction of the noise level even if only said two opposite main walls are of sound absorbing material.

According to another embodiment of the invention the other two opposite walls than said main walls of said first path portion are also of a sound absorbing material and have an average thickness of ≤ 30% or ≤ 20% of the average thickness of said main opposite walls, and said other two walls have especially a thickness of 5-20 mm. Such thinner walls of sound absorbing material, which may then also have a function of protection against condensing, may be suitable in the case of a substantially rectangular cross-section of said first path portion and when the dimensions of said ventilating arrangement are to be kept small.

According to another embodiment of the invention said first fan member is configured to exhaust air in a direction substantially perpendicular to the axis of rotation of the impeller thereof, and said at least two opposite main walls of sound absorbing material extend substantially in parallel with said axis of rotation of the impeller.

According to another embodiment of the invention said members of sound absorbing material are designed to define a substantially straight portion of said first path from the first fan member to a said first outlet opening. This constitutes a simple way of realising an efficient sound silencer for the supply air part of said ventilating arrangement inside said casing.

According to another embodiment of the invention said members of sound absorbing material defining said two opposite main walls have a substantially triangular cross-section perpendicular to the axis of rotation of said impeller of the first fan member. This may constitute an efficient way of realising said two opposite main walls of sound absorbing material while obtaining a great average thickness and sound absorbing capacity thereof.

According to another embodiment of the invention said flow directing means comprises an air guiding member defining an increase of the cross-section of the air flow path from the impeller to an exhaust opening of said first fan member, and according to another embodiment of the invention said flow directing means comprises a worm plate surrounding said impeller of the first fan member in the direction transversely to the axis of rotation of the impeller. This results in an efficient directing of supply air from the first fan member into said channel.

According to another embodiment of the invention the impeller of at least said first fan member has blades curved forwards with respect to the rotation direction of the impeller, and according to another embodiment of the invention the impeller of at least said first fan member has blades curved backwards with respect to the rotation direction of the impeller, and in this latter case it is not necessary to have a complete worm plate for directing the air flow in substantially one direction into said channel, although it may be advantageous.

According to another embodiment of the invention said two fan members and said rotary heat exchanger are arranged with the axes of rotation thereof extending substantially in parallel with each other. This way of arranging the fan members and the rotary heat exchangers inside said casing makes it possible to obtain flow paths inside said casing with less pressure fall in said air flow paths as a consequence of less restrictions of the cross-section over the extensions thereof inside said casing. This means that the power of the fan members may be reduced for obtaining a determined air flow rate.

According to another embodiment of the invention said fan members and rotary heat exchanger have their axes of rotation extending substantially in parallel with said side of the casing provided with said at least four openings, which has turned out to allow creation of air flow paths through said casing with a minimum of restrictions resulting in the advantages just mentioned.

According to a still further embodiment of the invention said casing has means configured to secure the casing on a structural element of a said building with said side thereof on the top, which for the reasons mentioned in the introduction mostly is a preferred orientation of said casing.

According to another embodiment of the invention said first fan member is arranged inside said casing at a location close to an end thereof opposite to said side, so that the length of said first path portion exceeds 50% of the distance between said side and said end of the casing. Such a location of said first fan member with respect to said side provided with said first outlet opening results in a possibility to obtain a remarkably reduction of the noise level by the arrangement of said members of sound absorbing material for defining said channel between the first member and said outlet opening.

According to another embodiment of the invention the rated power of said arrangement is ≤ 3 kW, especially 100 W - 2 kW, and the arrangement has an air flow capacity of ≤ 15 000 m³/h, especially 200 - 15 000 or 400 - 8 000 m³/h, calculated for an external pressure outside said casing of 100 - 300 Pascal. Accordingly, the present invention is applicable to ventilating arrangements of very different rated powers and air flow capacities, which also means that said casing, the members of sound absorbing material and said channel may have dimensions within a broad range, so that for instance the length of said channel defined by the members of sound absorbing material may be from about 300 mm to 1 000 mm or even longer.

Further advantages as well as advantageous features of the invention will appear from the following description.

### BRIEF DESCRIPTION OF THE DRAWINGS

With reference to the appended drawings, below follows a specific description of a ventilating arrangement according to an embodiment of the invention.

In the drawings:
- Fig 1: is a schematic view illustrating how an arrangement ac- cording to an embodiment of the invention is arranged in a building for ventilating the rooms of the building while obtaining heat transfer between exhaust air and supply air,
- Fig 2: is a simplified perspective view of the ventilating ar- rangement according to said embodiment of the present invention with one wall of the casing thereof removed for showing the interior of the casing,
- Fig 3: is a front view of the casing shown in fig 2,

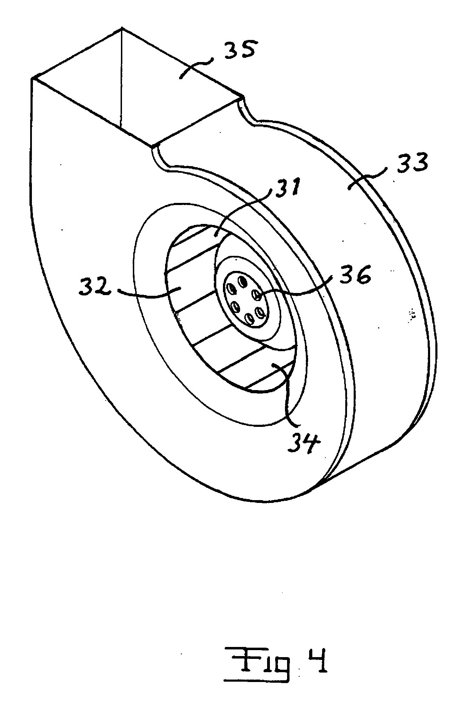

- Fig 4: is a perspective view of a first fan member in the venti- lating arrangement according to the embodiment of the invention,
- Fig 5: is a partially sectioned perspective view of a part of the ventilating arrangement according to Fig 2 broken away for showing the air conducting channel from the ex- haust opening of the first fan member to a first outlet opening for supply air, and
- Fig 6: is a simplified view from above of a part of the casing of the ventilating arrangement according to Fig 2.

### DETAILED DESCRIPTION OF AN EMBODIMENT OF THE INVENTION

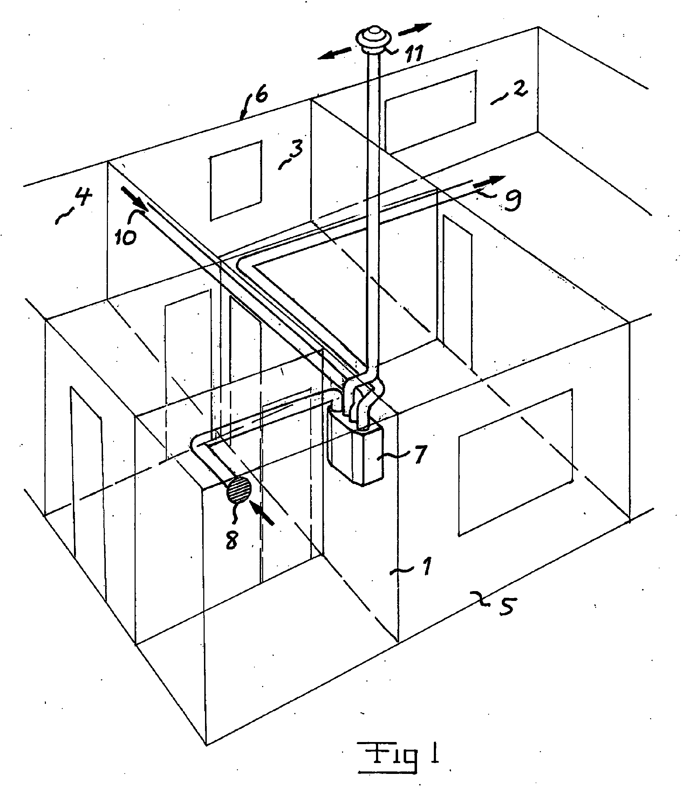

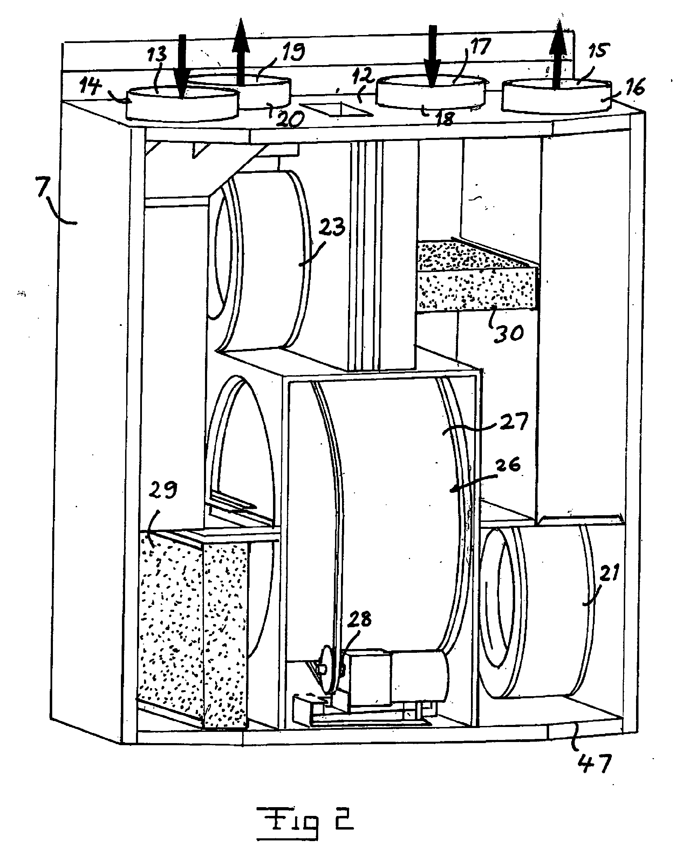

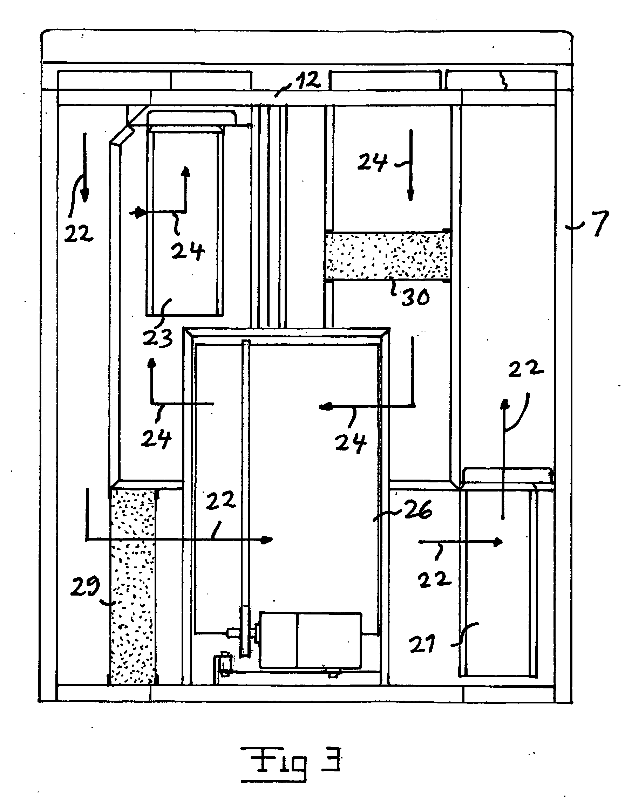

Fig 1 schematically shows a ventilating arrangement according to the present invention for ventilating one or more rooms 1-5 of a building 6. The arrangement comprises a casing 7 having at least four, in this case four, openings arranged on the same side thereof for connecting conduits for conducting supply air from the exterior 8 to the casing 7 before conducting it further into said rooms and exhaust air from the rooms (see 10) to the casing before being exhausted to the exterior (see 11). The construction and the function of a ventilating arrangement of this type according to an embodiment of the invention will now be explained while referring to both fig 2 and 3.

The casing has one a side 12 thereof:
- a first inlet opening 13 with means 14 for connecting to a conduit for supply air from the exterior of the building,
- a first outlet opening 15 with means 16 for connecting to a conduit for conducting supply air entering the casing through the first inlet opening 13 to said one or more rooms of the building,
- a second inlet opening 17 with means 18 for connecting to a conduit for conducting exhaust air from said one or more rooms, and
- a second outlet opening 19 with means 20 for connecting to a conduit for conducting exhaust air entering the casing through said second inlet opening 17 to the exterior of the

building. A first fan member 21 having an impeller with blades curved backwards with respect to the rotation direction of the impeller and a motor for rotation thereof is arranged to create a flow of air in a first path 22 inside the casing from the first inlet 13 to the first outlet 15. A second fan member 23 having an impeller with blades curved backwards with respect to the rotation direction of the impeller and a motor for rotation thereof is arranged to create a flow of air in a second path 24 inside the casing from the second inlet 17 to the second outlet 19. The casing may also have a fifth opening for exhaust air from a kitchen fan for mixing this exhaust air with the other exhaust air in said second path.

The casing also contains a rotary heat exchanger 26 arranged in said first and second paths 22, 24 for conducting air flows in these two paths through separate rooms of the rotary heat exchanger for heat transfer from the warmer of the two air flows to the colder one. The construction and the function of such a rotary heat exchanger is well known and will not be described in detail here. The rotary heat exchanger has a body 27 with a shape of a circular cylinder made of or containing filling material with a high capacity to absorb and emit heat energy. This body is driven by a motor 28 with a gear to rotate slowly. Partition walls separate the casing and seals with respect to each end surface of the body 26, so that half of the body is arranged in said first flow path and the other half of the body in said second flow path. It may here be referred to EP 1 662 211 A1.

A filter element 29, 30 is arranged in the first and second air flow path, respectively, upstream the rotary heat exchanger 26 for protection thereof against depositions of dust, insects and the like.

The axes of rotation of the impellers of the fan members are substantially in parallel with the axes of rotation of the body 27 of the rotary heat exchanger and these axes of rotation are substantially in parallel with said side 12 of the casing.

The filter element 29 in the first flow path is arranged in front of the rotary heat exchanger with a main large surface thereof extending substantially perpendicularly to the axis of rotation of the rotary heat exchanger and has a larger cross-section transversely to said path than the filter element 30 for exhaust air.

This way of mutual arrangement of the fan members and the rotary heat exchanger makes it possible to obtain a high efficiency of the ventilating arrangement. The casing 7 has here the following dimensions: height 700 mm, width 600 mm and depth 410 mm, assuming that the side with said at least four openings is considered to be the top of the casing. The body 27 of the rotary heat exchanger may then suitably have a diameter of about 320 mm.

The fan members have here impellers with a diameter of 190 mm, and may have the construction described in EP 08155273.9 included herein by making reference thereto. The impeller 31 of each fan member has blades 32 curved backwards with respect to the rotation direction of the impeller. A so-called worm or worm plate 33 surrounds the impeller and has a first opening 34 to the inner of the impeller for suction of air inside said worm plate by rotation of the impeller and a second exhaust opening 35.

The motor 36 is a conventional AC motor with a rated power of 55 W, which should be compared with AC motors with a rated power of 130-160 W in ventilating arrangements of this type already known for the same air flow rate through the casing and same size of the casing. This reduction of rated power is due to the higher efficiency of a fan member with an impeller with blades curved backwards and less restrictions in the first and second air flow paths in the casing, which results in a reduced specific fan power allowing this reduction of rated power. This result in less costs for the motor and less stays required therefore. It also results in a considerably lower consumption of power for the fan members and the entire ventilating arrangement. Accordingly, a very low specific fan power may be obtained without use of any expensive EC-motors.

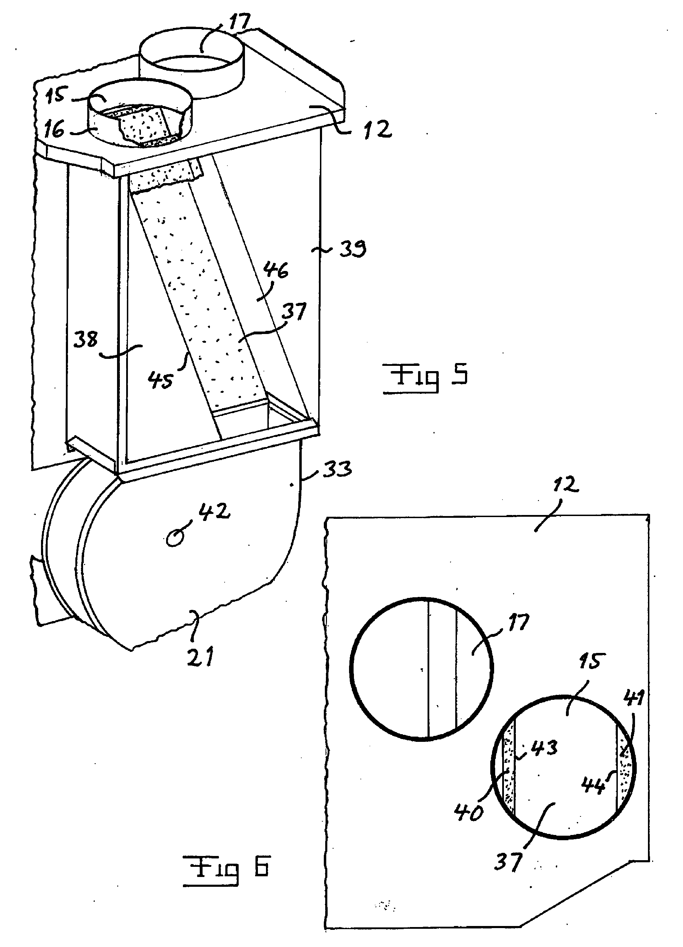

The "sound silencer" for supply air in the ventilating arrangement according to the invention is illustrated in Fig 5. The first fan member 21 comprises means in the form of said worm plate 33 configured to direct the flow of air exhausted from this fan member substantially in one direction, namely into a channel 37 defined by members 38-41 of sound absorbing material and extending over substantially the entire portion of said first path 22 extending between the first fan member and the first outlet opening 15. The sound absorbing material may be of any suitable type, such as glass fibre, mineral wool, foamed plastic etc. These members define in the present case a channel having a substantially rectangular cross-section and opposite such members 38, 39 forming two opposite main walls have a triangular cross-section perpendicular to the axis of rotation 42 of the first fan member. These two members 38, 39 have a thickness with respect to said cross-section varying from 0 mm to 150 mm from one end of the channel 37 to the other. The thickness of these members in the direction perpendicular thereto is about 100 mm.

The other two opposite walls 43, 44 than said main walls 45, 46 have also members of sound absorbing material, but these members 40, 41 are here much thinner and have a thickness of about 10 mm and the main object thereof is to insulate the channel against condensing. The straight channel 37 in the sound silencer for supply air thus formed has a length exceeding 50% of the distance between said side 12 for the outlet opening 15 and the opposite end 47 of the casing 7 thanks to the location of said first fan member close to the lower end of the casing opposite to the location of the outlet opening for supply air from the casing, which makes it possible to obtain a remarkable influence upon said noise level by the arrangement of the sound silencer.

It has been found that the sound silencer formed in this way lowers the noise level in the supply air channel 9 connected to the arrangement by about 13 dB in a ventilating arrangement with the dimensions described above, and for larger such ventilating arrangements the reduction of the noise level may exceed 20 dB. A ventilating arrangement with the dimensions described above is applicable to ventilate one apartment or an office, but the invention is also applicable to larger such arrangements as mentioned herein, which are then adapted to ventilate larger spaces, such as a house with a plurality of apartments.

The invention is of course not in any way restricted to the embodiment described above, but many possibilities to modifications thereof would be apparent to a person with ordinary skill in the art without departing from the basic idea of the invention as defined in the appended claims.

As already stated, the casing may be configured to be arranged with said side with the openings directed otherwise than shown.

The fan members may have other locations inside the casing than those shown, although these locations are advantageous.

A building and even an apartment thereof may be provided with more than one said ventilating arrangement.

It is pointed out that the invention is not restricted to the use of AC motors for the fan members.

The casing of a ventilating arrangement according to the invention may have quite different dimensions than disclosed above and may even have a height in the region of 1 500 mm, and the rated power thereof may be quite different, such as 100 W - 3 kW.

Furthermore, the channel defined by members of sound absorbing material has not to be straight, but it may have any other suitable extension, such as being curved. It may also have another cross-section than rectangular. When there are no particular restrictions of the space available for the ventilating arrangement all the walls surrounding said channel may be made thicker than shown in the figures.

## Claims

1. An arrangement for ventilating one or more rooms (1-5) of a building (6), said arrangement comprises a casing (7) having at least four openings arranged on the same side (12) thereof:
• a first inlet opening (13) with means (14) for connecting to a conduit for supply air from the exterior of the building,
• a first outlet opening (15) with means (16) for connecting to a conduit for conducting supply air entering the casing through said first inlet opening (13) to said one or more rooms of the building,
• a second inlet opening (17) with means (18) for connecting to a conduit for conducting exhaust air from said one or more rooms, and
• a second outlet opening (19) with means (20) for connecting to a conduit for conducting exhaust air entering the casing through said second inlet opening (17) to the exterior of the building,
the casing further including:
• a first fan member (21) having an impeller (31) and a motor (36) for rotation thereof arranged to create a flow of air in a first path (22) inside the casing from said first inlet opening (13) to said first outlet opening (15),
• a second fan member (23) having an impeller (31) and a motor (36) for rotation thereof arranged to create a flow of air in a second path (24) inside the casing from said second inlet opening (17) to said second outlet opening (19), and
• a rotary heat exchanger (26) arranged in said first and second paths for conducting air flows in said two paths through separate rooms of the rotary heat exchanger for heat transfer from the warmer of the two air flows to the colder one,
said first fan member (21) comprising means (33) configured to direct the flow of exhaust air from this member substantially in one direction, **characterized in that** said casing contains members (38-41) of sound absorbing material defining a channel (37) forming substantially the entire portion of said first path extending between said first fan member (21) and said first outlet opening (15), that said members of sound absorbing material form at least two opposite main walls (45, 46) defining said first path portion, and that said first path portion (37) has a substantially rectangular cross-section at least at the end thereof closest to the first fan member.

2. An arrangement according to claim 1 ***characterized* in that** the average thickness of said at least two opposite main walls (45, 46) of sound absorbing material is at least 50% of the cross-section dimension of said first path portion (37) in the direction of said thickness.

3. An arrangement according to claim 1, ***characterized* in that** the other two opposite walls (43, 44) than said main walls of said first path portion (37) are also of a sound absorbing material and have an average thickness of ≤ 30% or ≤ 20% of the average thickness of said opposite main walls (45, 46), and said other two walls have especially a thickness of 5-20 mm.

4. An arrangement according to at least claim 1, ***characterized* in that** said first fan member (21) is configured to exhaust air in a direction substantially perpendicular to the axis of rotation of the impeller (31) thereof, and that said at least two opposite main walls (45, 46) of sound absorbing material extend substantially in parallel with said axis of rotation (42) of the impeller.

5. An arrangement according to any of the preceding claims, ***characterized* in that** said members (38-41) of sound absorbing material are designed to define a substantially straight portion (37) of said first path from the first fan member (21) to said first outlet opening (15).

6. An arrangement according to claim 4 and 5, ***characterized* in that** said members of sound absorbing material defining said two opposite main walls (45, 46) have a substantially triangular cross-section perpendicular to the axis of rotation of said impeller (31) of the first fan member (21).

7. An arrangement according to any of the preceding claims, ***characterized* in that** said flow directing means comprises an air guiding member (33) defining an increase of the cross-section of the air flow path from the impeller (31) to an exhaust opening (35) of said first fan member (21).

8. An arrangement according to any of the preceding claims, ***characterized* in that** said flow directing means comprises a worm plate (33) surrounding said impeller (31) of the first fan member (21) in the direction transversely to the axis of rotation (42) of the impeller.

9. An arrangement according to claim 8, ***characterized* in that** the impeller of at least said first fan member has blades curved forwards with respect to the rotation direction of the impeller.

10. An arrangement according to any of claims 1-8, ***characterized* in that** the impeller (31) of at least said first fan member (21) has blades (32) curved backwards with respect to the rotation direction of the impeller.

11. An arrangement according to any of the preceding claims, ***characterized* in that** said two fan members (21, 23) and said rotary heat exchanger (26) are arranged with the axes of rotation thereof extending substantially in parallel with each other.

12. An arrangement according to claim 11, ***characterized* in that** said fan members (21, 23) and rotary heat exchanger (26) have their axes of rotation extending substantially in parallel with said side (12) of the casing (7) provided with said at least four openings.

13. An arrangement according to any of the preceding claims, ***characterized* in that** said casing (7) has means configured to secure the casing on a structural element of a said building with said side thereof on the top.

14. An arrangement according to any of the preceding claims, ***characterized* in that** said first fan member (21) is arranged inside said casing at a location close to an end (47) thereof opposite to said side (12), so that the length of said first path portion (37) exceeds 50% of the distance between said side (12) and said end (47) of the casing.

15. An arrangement according to any of the preceding claims, ***characterized* in that** the rated power of said arrangement is ≤ 3 kW, especially 100 W - 2 kW, and the arrangement has an air flow capacity of ≤ 15 000 m³/h, especially 200 - 15 000 or 400 - 8 000 m³/h, calculated for an external pressure outside said casing of 100 - 300 Pascal.

## Patentansprüche

1. Anordnung zur Belüftung eines oder mehrerer Räume (1 - 5) eines Gebäudes (6), umfassend ein Gehäuse (7) mit wenigstens vier Öffnungen, die auf derselben Seite (12) des Gehäuses angeordnet sind, nämlich eine erste Einlaßöffnung (13) mit Mitteln (14) zum Verbinden mit einer Leitung für die Luftzufuhr von außerhalb des Gebäudes; eine erste Auslaßöffnung (15) mit Mitteln (16) zum Verbinden mit einer Leitung zum Ableiten von Abluft aus dem einen oder den mehreren Räumen und einer zweiten Auslaßöffnung (19) mit Mitteln (20) zum Verbinden mit einer Leitung zum Ableiten von Abluft nach außerhalb des Gehäuses, die durch das Gehäuse durch die zweite Einlaßöffnung (17) eintritt, wobei das Gehäuse des weiteren mit einem ersten Gebläse (21) versehen ist, das ein Laufrad (31) und einen Motor (36) zum Antrieb desselben aufweist, die so angeordnet sind, daß ein Luftstrom in einer ersten Bahn (22) im Inneren des Gehäuses von der ersten Einlaßöffnung (13) zu der ersten Auslaßöffnung (15) erzeugt wird; ferner umfassend einen zweiten Ventilator (23) mit einem Laufrad (31) und einem Motor (36) zum Antrieb desselben, die so angeordnet sind, daß ein Luftstrom in einer zweiten Bahn (24) im Inneren des Gehäuses von der zweiten Einlaßöffnung (17) zu der zweiten Auslaßöffnung (19) erzeugt wird, und des weiteren umfassend einen rotierenden Wärmetauscher (26), der in der genannten ersten und zweiten Bahn angeordnet ist, um die Luftströme in den beiden Bahnen durch getrennte Räume des rotierenden Wärmetauschers zu lenken und dadurch eine Wärmeübertragung von dem wärmeren der beiden Luftströme auf den kälteren zu bewirken, wobei der erste Ventilator (21) mit Mitteln (33) ausgestattet ist, die so gebaut sind, daß die Strömung der Abluft von diesem Ventilator im wesentlichen in eine Richtung gelenkt wird, **dadurch gekennzeichnet, daß** das Gehäuse schallabsorbierende Materialkörper (38 - 41) enthält, die einen Kanal (37) begrenzen, der im wesentlichen den gesamten Teil der ersten Bahn bildet, die sich zwischen dem ersten Gebläse (21) und der ersten Auslaßöffnung (15) erstreckt, daß ferner diese Körper aus schallabsorbierendem Material wenigstens zwei gegenüberliegende Hauptwände (45, 46) bilden, die den ersten Kanal begrenzen, und daß dieser erste Kanal (37) einen im wesentlichen rechteckigen Querschnitt hat, und zwar wenigstens an demjenigen Ende des Kanals, das dem ersten Ventilator am nächsten liegt.

2. Anordnung nach Anspruch 1, **dadurch gekennzeichnet, daß** die durchschnittliche Dicke der wenigstens zwei gegenüberliegenden Hauptwände (45, 46) aus schallabsorbierendem Material wenigstens 50 % der Querschnittsabmessung des ersten Kanals (37) in Richtung der Dicke beträgt.

3. Anordnung nach Anspruch 1, **dadurch gekennzeichnet, daß** die anderen beiden gegenüberliegenden Wände (43, 44) als die Hauptwände des ersten Kanals (37) ebenfalls aus schallabsorbierendem Material bestehen und eine durchschnittliche Dicke von ≤ 30 % oder ≤ 20 % der durchschnittlichen Dicke der gegenüberliegenden Hauptwände (45, 46) aufweisen, und daß die anderen beiden Wände insbesondere eine Dicke von 5 - 20 mm besitzen.

4. Anordnung nach wenigstens Anspruch 1, **dadurch gekennzeichnet, daß** der erste Ventilator (21) so gebaut ist, daß er Luft in eine Richtung im wesentlichen lotrecht zu der Drehachse eines Laufrades (31) bläst, und daß die wenigstens zwei gegenüberliegenden Hauptwände (45, 46) aus schallabsorbierendem Material sich im wesentlichen parallel zu der Drehachse (42) des Laufrades erstrecken.

5. Anordnung nach einem der vorhergehenden Ansprüche, **dadurch gekennzeichnet, daß** die Teile (38 - 41) aus schallabsorbierendem Material so gebaut sind, daß sie einen im wesentlichen gerade verlaufenden Abschnitt (37) des ersten Kanals von dem ersten Ventilator (21) zu der ersten Auslaßöffnung (15) bilden.

6. Anordnung nach Anspruch 4 und 5, **dadurch gekennzeichnet, daß** die Teile aus schallabsorbierendem Material, die die beiden gegenüberliegenden Hauptwände (45, 46) bilden, einen im wesentlichen dreieckigen Querschnitt haben, und zwar lotrecht zu der Drehachse des ersten Laufrades (31) des ersten Ventilators (21).

7. Anordnung nach einem der vorhergehenden Ansprüche, **dadurch gekennzeichnet, daß** die die Strömung lenkenden Mittel einen Luftführungskörper (33) aufweisen, der eine Zunahme des Querschnitts des Luftströmungsweges von dem Laufrad (31) zu der Austragsöffnung (35) des ersten Ventilators (21) bildet.

8. Anordnung nach einem der vorhergehenden Ansprüche, **dadurch gekennzeichnet, daß** die die Strömung lenkenden Mittel eine Schneckenplatte (33) aufweisen, die das erste Laufrad (31) des ersten Ventilators (21) in Richtung quer zu der Drehachse (42) des Laufrades umgibt.

9. Anordnung nach Anspruch 8, **dadurch gekennzeichnet, daß** das Laufrad von wenigstens dem ersten Ventilator Schaufeln aufweist, die in Bezug auf die Drehrichtung des Laufrades nach vorne gerichtet sind.

10. Anordnung nach einem der Ansprüche 1 bis 8, **dadurch gekennzeichnet, daß** das Laufrad (31) von wenigstens dem ersten Ventilator (21) Schaufeln 832) aufweist, die in Bezug auf die Drehrichtung des Laufrades rückwärts gerichtet sind.

11. Anordnung nach einem der vorhergehenden Ansprüche, **dadurch gekennzeichnet, daß** die beiden Ventilatoren (21, 23) und der rotierende Wärmetauscher (26) mit ihren Drehachsen so angeordnet sind, daß sie sich im wesentlichen parallel zueinander erstrecken.

12. Anordnung nach Anspruch 11, **dadurch gekennzeichnet, daß** die Ventilatoren (21, 23) und der rotierende Wärmetauscher (26) mit ihren Drehachsen so angeordnet sind, daß sie sich im wesentlichen parallel zu der Seite (12) des Gehäuses (7) erstrecken, die mit wenigstens vier Öffnungen versehen ist.

13. Anordnung nach einem der vorhergehenden Ansprüche, **dadurch gekennzeichnet, daß** das Gehäuse (11) mit Mitteln versehen ist, die so gebaut sind, daß das Gehäuse auf einem Bauelement des Gebäudes befestigt ist, wobei seine genannte Seite oben liegt.

14. Anordnung nach einem der vorhergehenden Ansprüche, **dadurch gekennzeichnet, daß** der erste Ventilator (21) im Inneren des Gehäuses an einer Stelle angeordnet ist, die an einem Ende (47) desselben, gegenüber der genannten Seite (12), liegt, so daß die Länge des ersten Bahnabschnittes (37) mehr als 50 % des Abstandes zwischen der Seite (12) und dem genannten Ende (47) des Gehäuses beträgt.

15. Anordnung nach einem der vorhergehenden Ansprüche, **dadurch gekennzeichnet, daß** die Nennleistung der Anordnung ≤ 3 kW, insbesondere 100 W - 2 kW, beträgt, und daß die Anordnung eine Luftstromleistung von ≤ 15 000 m³ / h, insbesondere 200 - 15 000 oder 400 - 8 000 m³ / h, aufweist, und zwar berechnet für einen Außendruck außerhalb des Gehäuses von 100 - 300 Pascal.

## Revendications

1. Système de ventilation d'une ou plusieurs pièce(s) (1-5) d'un bâtiment (6), ledit système comprenant une enceinte (7) ayant au moins quatre ouvertures placées sur le même côté (12) de celle-ci :
- une première ouverture d'entrée (13) munie d'un moyen (14) de raccordement à un conduit d'alimentation en air depuis l'extérieur dudit bâtiment,
- une première ouverture d'évacuation (15) munie d'un moyen (16) de raccordement à un conduit destiné à acheminer l'air qui pénètre dans ladite enceinte par le biais de ladite première ouverture d'entrée (13) à ladite ou aux dites pièce(s) dudit bâtiment,
- une seconde ouverture d'entrée (17) munie d'un moyen (18) de raccordement à un conduit destiné à acheminer l'air évacué de ladite ou desdites pièce(s), et
- une seconde ouverture d'évacuation (19) munie d'un moyen (20) de raccordement à un conduit destiné à acheminer l'air d'évacuation qui pénètre dans ladite enceinte par le biais de ladite seconde ouverture d'entrée (17) vers l'extérieur dudit bâtiment,
ladite enceinte comprenant en outre :
- un premier ventilateur (21) muni d'une turbine (31) et d'un moteur (36) destiné à la faire tourner, prévu pour créer un flux d'air sur un premier trajet (22) à l'intérieur de ladite enceinte, entre ladite première ouverture d'entrée (13) et ladite première ouverture d'évacuation (15),
- un second ventilateur (23) muni d'une turbine (31) et d'un moteur (36) destiné à la faire tourner, prévu pour créer un flux d'air sur un second trajet (24) à l'intérieur de adite enceinte, entre ladite seconde ouverture d'entrée (17) et ladite seconde ouverture d'évacuation (19),
et
- un échangeur thermique rotatif (26) prévu sur lesdits premier et second trajets afin d'acheminer les flux d'air sur lesdits deux trajets par le biais de sections distinctes dudit échangeur thermique rotatif de façon à transférer la chaleur entre le plus chaud desdits deux flux d'air et le plus froid desdits deux flux d'air,
ledit premier ventilateur (21) comprenant un moyen (33) configuré pour orienter son flux d'air d'évacuation sensiblement dans une direction, **caractérisé en ce que** ladite enceinte contient des éléments (38-41) en matériau insonorisant qui définissent un canal (37) formant sensiblement la totalité de la partie dudit premier trajet qui s'étend entre ledit premier ventilateur (21) et ladite première ouverture d'évacuation (15),
**en ce que** lesdits éléments en matériau insonorisant forment au moins deux parois principales opposées (45, 46) définissant ladite première partie de trajet,
et **en ce que** ladite première partie de trajet (37) possède une section transversale sensiblement rectangulaire au moins à une extrémité de celle-ci la plus proche dudit premier ventilateur.

2. Système selon la revendication 1, **caractérisé en ce que** l'épaisseur moyenne desdites deux parois principales opposées (45, 46) en matériau insonorisant est égale à au moins 50% de la dimension de la section transversale de ladite première partie de trajet (37) dans la direction de ladite épaisseur.

3. Système selon la revendication 1, **caractérisé en ce que** les deux autres parois opposées (43, 44) auxdites parois principales de ladite première partie de trajet (37) sont également en matériau insonorisant et possèdent une épaisseur moyenne égale à ≤30% ou ≤20% de l'épaisseur moyenne desdites parois principales opposées (45, 46), et lesdites deux autres parois possèdent plus particulièrement une épaisseur de 5 à 20 mm.

4. Système selon la revendication 1 au moins, **caractérisé en ce que** ledit premier ventilateur (21) est configuré pour évacuer l'air dans une direction sensiblement perpendiculaire à l'axe de rotation de sa turbine (31), et **en ce que** lesdites deux parois principales opposées (45, 46) en matériau insonorisant s'étendent sensiblement de manière parallèle audit axe de rotation (42) de ladite turbine.

5. Système selon l'une quelconque des revendications précédentes, **caractérisé en ce que** lesdits éléments (38-41) en matériau insonorisant sont conçus pour définir une partie sensiblement droite (37) dudit premier trajet entre ledit premier ventilateur (21) et ladite première ouverture d'évacuation (15).

6. Système selon les revendications 4 et 5, **caractérisé en ce que** lesdits éléments en matériau insonorisant qui définissent lesdites deux parois principales opposées (45, 46) possèdent une section transversale sensiblement triangulaire perpendiculaire à l'axe de rotation de ladite turbine (31) dudit premier ventilateur (21).

7. Système selon l'une quelconque des revendications précédentes, **caractérisé en ce que** ledit moyen d'orientation du flux comprend un élément de guidage de l'air (33) qui définit une augmentation de la section transversale du trajet de flux d'air entre ladite turbine (31) et une ouverture d'évacuation (35) dudit premier ventilateur (21).

8. Système selon l'une quelconque des revendications précédentes, **caractérisé en ce que** ledit moyen d'orientation du flux comprend une plaque d'usure (33) qui entoure ladite turbine (31) dudit premier ventilateur (21) dans la direction transversale à l'axe de rotation (42) de ladite turbine.

9. Système selon la revendication 8, **caractérisé en ce que** la turbine dudit premier ventilateur possède des aubes courbées vers l'avant par rapport au sens de rotation de ladite turbine.

10. Système selon l'une quelconque des revendications 1 à 8, **caractérisé en ce que** ladite turbine (31) dudit premier ventilateur (21) possède des aubes (32) courbées vers l'arrière par rapport au sens de rotation de ladite turbine.

11. Système selon l'une quelconque des revendications précédentes, **caractérisé en ce que** lesdits deux ventilateurs (21, 23) et ledit échangeur thermique rotatif (26) sont disposés avec leurs axes de rotation s'étendant de manière sensiblement parallèle l'un à l'autre.

12. Système selon la revendication 11, **caractérisé en ce que** les axes de rotation desdits ventilateurs (21, 23) et dudit échangeur thermique rotatif (26) s'étendent sensiblement de manière parallèle audit côté (12) de ladite enceinte (7) muni d'au moins quatre ouvertures.

13. Système selon l'une quelconque des revendications précédentes, **caractérisé en ce que** ladite enceinte (7) possède un moyen configuré pour fixer ladite enceinte sur un élément structurel dudit bâtiment, avec ledit côté sur la partie supérieure.

14. Système selon l'une quelconque des revendications précédentes, **caractérisé en ce que** ledit premier ventilateur (21) est placé à l'intérieur de ladite enceinte à un emplacement proche d'une extrémité (47) de celle-ci opposée audit côté (12), de sorte que la longueur de adite première partie de trajet (37) soit supérieure à 50% de la distance entre ledit côté (12) et ladite extrémité (47) de ladite enceinte.

15. Système selon l'une quelconque des revendications précédentes, **caractérisé en ce que** la puissance nominale dudit système est ≤ 3 kW, et plus particulièrement de 100 W à 2 kW, et ledit système possède une capacité de flux d'air ≤15000 m³/ h, et plus particulièrement de 200 à 15000 ou de 400 à 8000 m³/h, calculée pour une pression externe à l'extérieur de ladite enceinte de 100 à 300 Pascal.
